Europäisches Patentamt

European Patent Office

Office européen des brevets

(19)

(11) Veröffentlichungsnummer: **0 210 428**
**B1**

(12) **EUROPÄISCHE PATENTSCHRIFT**

(45) Veröffentlichungstag der Patentschrift: 02.05.90

(51) Int. Cl.⁵: **B 65 D 75/20, B 65 D 75/62**

(21) Anmeldenummer: **86108507.4**

(22) Anmeldetag: **21.06.86**

(54) **Ein- oder Mehrwegbehälter für rieselfähige Füllgüter.**

(30) Priorität: **22.07.85 DE 3526113**

(43) Veröffentlichungstag der Anmeldung:
**04.02.87 Patentblatt 87/06**

(45) Bekanntmachung des Hinweises auf die
Patenterteilung:
**02.05.90 Patentblatt 90/18**

(84) Benannte Vertragsstaaten:
**BE CH DE FR GB IT LI SE**

(56) Entgegenhaltungen:
**EP-A-0 078 471
CH-A- 294 200
DE-U-8 127 806
FR-A-1 181 592
US-A-4 463 867**

(73) Patentinhaber: **Brogli, Werner
Im oberen Letten 3
CH-4204 Duggingen (CH)**

(72) Erfinder: **Brogli, Werner
Im oberen Letten 3
CH-4204 Duggingen (CH)**

(74) Vertreter: **Schmitt, Hans, Dipl.-Ing. et al
Patentanwälte Dipl.-Ing H. Schmitt Dipl.-Ing. W.
Maucher Dreikönigstrasse 13
D-7800 Freiburg (DE)**

Courier Press, Leamington Spa, England.

**Beschreibung**

Die Erfindung betrifft einen Ein- oder Mehrwegbehälter für rieselfähige Füllgüter, beispielsweise Pulver, Granulat oder Flüssigkeit, hergestellt aus einem einzigen, steifen, jedoch biegsamen, flachen Werkstoffzuschnitt aus beschichtetem Karton, welcher durch Aufwölben oder Formen eines Mittelabschnittes oder Bodens des zunächst flachen Zuschnittes vorzugsweise nach innen und durch gleichzeitiges Aufrichten und Aufwölben von zwei Seitenabschnitten bis zur Zusammenfügung und dichten Verbindung der gegenüberliegenden Seitenränder und Flansche dieser Seitenabschnitte geformt ist, wobei an wenigstens einer Stelle die aufeinanderliegenden Flansche zur Bildung zumindest eines flachen Durchtrittskanals nicht verbunden sind, welcher Kanal in einer vor Gebrauch geschlossene, abreißbare Zunge mündet.

Ein derartiger Behälter ist aus Figur 9 der EP—A—78 471 bekannt. Dabei ist die Zunge im Bereich des Austrittskanales mit einem gegenüber der Kanalbreite vergrößerten Flansch versehen, damit der gesamte Zuschnitt auch im Bereich der abreißbaren Zunge eine gleichbleibende Breite behält. Darüber hinaus ist dadurch dieser griffartige Flansch vergrößert.

Für Personen mit Behinderungen an den Händen, die den Inhalt des Behälters beispielsweise als Medikament zu sich nehmen sollen oder bei der Notwendigkeit, den Behälter sehr schnell zu öffnen—beispielsweise wenn der Behälter ein besonderes Getränk für Wettläufer enthält und während des Laufes gebraucht werden soll—ist dieser bekannte Behälter jedoch nicht oder wenig geeignet, da die abtrennbare Zunge selbst bei vorhandenen Kerben als Aufreißhilfe eine gewisse Geschicklichkeit und Kraft beim Öffnen voraussetzt, die bei den erwähnten behinderten Personen nicht vorhanden ist und während eines Wettlaufes auch kaum aufgebracht werden kann.

Erst recht gelingt es diesem Personenkreis nicht, einen derartigen Behälter mit Hilfe eines Werkzeuges, insbesondere einer Schere zu öffnen.

Es besteht deshalb die Aufgabe, einen Behälter der eingangs erwähnten Art zu schaffen, der ohne Werkzeug schnell und einfach selbst von Behinderten oder unter ungünstigen Umständen leicht an einer vorbestimmten Stelle aufgerissen werden kann, wobei das Aufreißen selbst für Personen möglich sein soll, deren Finger praktisch unbeweglich sind.

Die Lösung dieser Aufgabe besteht darin, daß die Zunge im Bereich des Durchtrittskanales des Behälters eine gegenüber der Kanalbreite und/oder den Randflanschen so vergrößerte griffartige Zunge ist, daß sie wenigstens eine zusätzliche Greifhilfe aufweist, die als ein die vergrößerte Zunge durchsetzendes Fingerloch ausgebildet ist.

Dadurch wird das Hauptproblem beim Öffnen eines solchen Behälters beseitigt, daß nämlich die Zunge bei der aufzubringenden Kraft aus behinderten Händen abrutscht, so daß die in den Armen des Benutzers eventuell durchaus vorhandenen Kräfte gar nicht auf die Reißstelle übertragen werden können. Nunmehr kann sowohl der Behälter als auch die abreißbare Zunge genügend fest erfaßt werden, um die erforderliche Reißkraft auch unter ungünstigen Bedingungen aufbringen zu können. Dies wird vor allem durch das Fingerloch ermöglicht. Dennoch wird der Behälter kaum verteuert, weil lediglich der Zuschnitt etwas größer sein und eine Lochung erhalten mußt. Das Fingerloch erlaubt ein Abreißen selbst für Personen, deren Finger durch Gicht verkrümmt oder praktisch unbeweglich sind.

Besonders zweckmäßig ist es, wenn an der Öffnungstrennstelle zwischen der griffartigen Zunge und dem Behälter eine Aufreißhilfe vorgesehen ist. Dadurch kann die zum Abreißen der Zunge erforderliche Kraft noch gesenkt werden.

Vorteilhaft ist es, wenn das Fingerloch exzentrisch an der Zunge angeordnet ist, damit sie schräg zum Behälter erfaßt und abgerissen werden kann.

Die seitliche Abmessung der vergrößerten Zunge kann etwa der Breite des Behälters entsprechen und quer zu dem Austrittskanal mit diesem T-förmig an der Behältermündung angeordnet sein. Durch diese Wahl der seitlichen Abmessung ist vor allem auch die Herstellung des Zuschnittes für den Behälter günstig. Darüber hinaus hat der Benutzer dann praktisch zwei gleichbreite Teile in den Händen, die er durch eine Reißbewegung gut voneinander trennen kann.

Die in der Ebene der Zunge und des Flansches liegenden Ränder des Behälters können im Bereich der vergrößerten abreißbaren Zunge konisch gegen den Rand dieser Zunge hin laufen und dadurch kann zwischen dem entsprechend konischen Bereich des Behälters und der demgegenüber seitlich überstehenden abreißbaren Zunge eine spitzwinklige Kerbe als Aufreißhilfe gebildet sein. Läuft also der Behälter selbst in seinem Mündungsbereich konisch zusammen, während die vergrößerte Zunge die ursprüngliche Breite des Behälters hat, ergibt sich als schmalste Stelle der Abreißbereich an der Behältermündung, der auf diese Weise auch von vornherein geschwächt ist. Dennoch ist diese Stelle bei unbenutztem Behälter dauerhaft dicht wie der gesamt umlaufende Rand.

Der Behälterinnenraum kann sich teilweise in die vergrößerte Zunge erstrecken und fortsetzen. Dadurch ist gewährleistet, daß nach dem Abreißen der Zunge der Behälter mit Sicherheit geöffnet ist.

Um ein sicheres Austreten beispielsweise von Pulver oder Granulat—insbesondere ein entsprechendes Medikament—zu gewährleisten, kamm im Mündungsbereich des Behälters wenigstens eine in Ausgießrichtung verlaufende Wandschwächung, Rillung od. dgl. vorgesehen sein, die das Aufspreizen der nach dem Abreißen der Zunge gebildeten Öffnung erleichtert oder einen Führungskanal bildet, durch den der Inhalt beim Ausgießen oder Auspressen des Behälters leicht und gezielt austreten kann, so daß selbst eine behinderte Person den Inhalt leicht entnehmen und beispielsweise in ein Glas schütten kann.

An der Mündung des Behälters kann an der Trennstelle zwischen ihm und der Zunge eine quer zur Ausgießrichtung verlaufende Wandschwächung, Rilling od. dgl. vorgesehen sein, die das Abreißen weiter erleichtert und gezielt in diesen Mündungsbereich verlegt. Sind eine in Ausgießrichtung und eine quer dazu verlaufende Rillung vorhanden, kann die in Ausgießrichtung verlaufende Rillung etwa rechtwinklig in die quer verlaufende Rillung münden. Die beiden Rillungen, innerhalb deren Bereich die Randflansche des Behälters von vornherein nicht aneinanderliegen, bilden dann praktisch ein T.

Vor allem bei Kombination einzelner oder mehrerer, insbesondere aller vorbeschriebenen Merkmale und Maßnahmen ergibt sich ein aufreißbarer Behälter, dessen Herstellung sehr preiswert ist, der aber selbst unter ungünstigen Umständen oder vor an den Händen behinderten Personen leicht an der vorgesehenen Stelle aufgerissen werden kann, um den Inhalt entnehmen zu können. Dieser erhebliche Vorteil wird vor allem durch eine zunächst scheinbar unnötige Maßnahme, nämlich eine gegenüber dem aufzureißenden Kanal in ihrer Abmessung erheblich vergrößerte Abreißzunge erreicht, die auch unter ungünstigen Umständen gut erfaßt werden kann und auf welche die Abreißkräfte entsprechend einfach und bequem übertragen werden können.

Nachstehend ist die Erfindung mit ihren ihr als wesentliche zugehörenden Einzelheiten anhand der Zeichnung noch näher beschrieben.

Es zeigt in schematisierter Darstellung:

Fig. 1 den Mündungsbereich eines erfindungsgemäßen Behälters mit einer vergrößerten Abreißzunge, die als Greifhilfe ein Fingerloch aufweist, sowie

Fig. 2 eine der Fig. 1 entsprechende Darstellung eines zweiten Ausführungsbeispiels, bei welchem die abreißbare Zunge zwei exzentrische Fingerlöcher hat.

Ein im ganzen mit 1 bezeichneter, nur im Bereich seiner Mündung 2 dargestellter Ein- oder Mehrwegbehälter, im folgenden kurz Behälter 1 genannt, dient zur Aufnahme rieselfähiger Füllgüter wie Pulver, Granulat oder Flüssigkeiten. Dieser Behälter 1 kann aus einem einzigen steifen, jedoch biegsamen, flachen Werkstoffzuschnitt aus beschichtetem Karton hergestellt sein, so daß er einerseits eine ausreichende Stabilität hat, andererseits aber nach dem Öffnen auspreßbar oder aber auch ausgießbar ist. Dieser Werkstoffzuschnitt kann dabei einen in der Zeichnung nicht dargestellten aufgewölbten Boden oder Mittelabschnitt haben, von welchem die Seitenwandabschnitte ausgehen, die an den einander gegenüberliegenden Seitenrändern als Randflansche 3 aneinanderliegen und miteinander verbunden sind.

Dabei wird ein zunächst flacher Durchtrittskanal 4 im Bereich der Mündung 2 offengelassen, welcher Kanal 4 in eine vor Gebrauch geschlossene, also um dem Mündungsbereich des Kanales 4 ringsum geschlossene, abtrennbare Zunge 5 mundet.

Um auch unter ungünstigen Bedingungen, z.B. während eines Wettlaufes oder im Falle einer Behinderung der Hände beispielsweise bei einem Gichtkranken, die Zunge 5 dennoch bequem abreißen zu können, ohne für ihr Abtrennen ein Werkzeug zu benötigen, ist die Zunge 5 im Bereich des Austrittskanales 4 des Behälters 1 gegenüber der Abmessung des Kanales 4 und der der Randflansche 3 erheblich vergrößert, so daß diese Zunge 5 nicht nur die Funktion hat, die Kanalmündung zunächst geschlossen zu halten und abreißbar zu machen, sondern sie dient vor allem als griffartiger Flansch, der sehr gut erfaßt und auch unter ungünstigen Bedingungen abgerissen werden kann, weil die Reißkräfte an entsprechend großen Hebelarmen und an einem entsprechend gut zu fassenden Teil aufgebracht werden können. Dabei ist als zusätzliche Erleichterung an der zwischen Behälter 1 und Zunge 5 befindlichen Öffnungstrennteile 6 zwischen dem griffartigen Flansch 5 und dem Behälter eine noch näher zu beschreibende Aufreißhilfe vorgesehen, die die erforderlichen Reißkräfte noch vermindert.

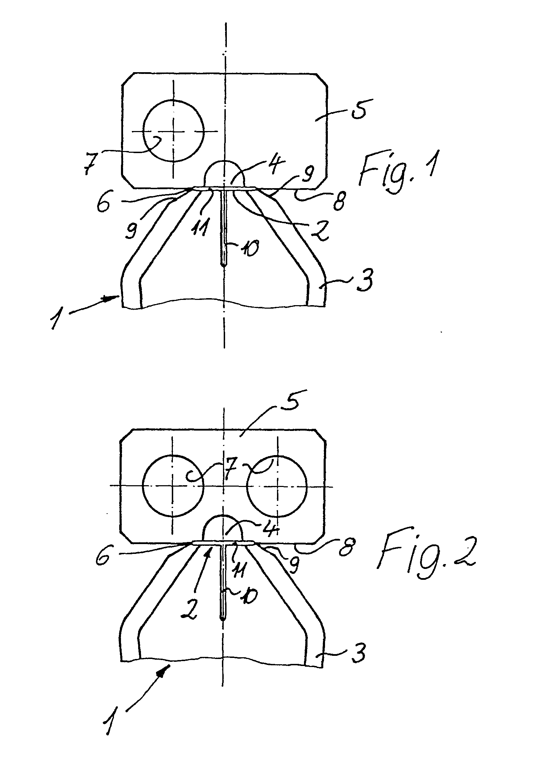

Zusätzlich ist in beiden Ausführungsbeispielen vorgesehen, daß die griffartig vergrößerte Zunge 5 nicht nur selbst besser erfaßbar ist, sondern auch noch eine Greifhilfe aufweist, die in beiden Ausführungsbeispielen als Fingerloch 7 ausgebildet ist. Das Fingerloch 7 ist dabei exzentrisch an der Zunge 5 angeordnet, damit beim Einstecken eines Fingers eine entsprechende, quer zur Mündung 2 gerichtete Reißkraft praktisch von selbst aufgebracht werden kann. Bei Anordnung zweier exzentrischer Fingerlöcher 7 gemäß Fig. 2 wird das Öffnen noch weiter dadurch erleichtert, daß nicht erst das Fingerloch 7 gesucht werden muß, weil eines der Fingerlöcher 7 in jedem Falle schnell gefunden werden kann.

In beiden Ausführungsbeispielen ist ferner vorgesehen, daß die seitliche Abmessung der Zunge 5 etwa der Breite des Behälters 1 entspricht und quer zu dem Austrittskanal 4 mit diesem T-förmig an der Behältermündung 2 angeordnet ist. Die Aufreißhilfe zur Verminderung der erforderlichen Reißkräfte ist zunächst dadurch geschaffen, daß die in der Ebene der Zunge 5 und des Flansches liegenden Ränder 3 des Behälters 1 im Bereich der vergrößerten abreißbaren Zunge 5 konische gegen den Rand 8 der Zunge 5 hin laufen und daß zwischen dem dadurch konischen Bereich des Behälters 1 und der demgegenüber seitlich überstehenden abreißbaren Zunge 5 somit eine spitzwinklige Kerbe gebildet ist, die durch einen Schrägschnitt 9 des Randes 3 in diesem Bereich noch spitzwinkliger gemacht ist, als sie bei einem gleichbleibend breiten Rand 3 wäre. Man erkennt in beiden Figuren deutlich, daß auf diese Weise einerseits der Bereich der Mündung 2 entsprechend schmal wird und andererseits sehr spitzwinklige Kerben von beiden Seiten her eine beliebige Aufreißrichtung ermöglichen. Diese Kombination von Merkmalen und Maßnahmen im Zusammenwirken mit der großflächigen Zunge mit Greifhilfe erleichtern auch stark behinderten Personen ein Öffnen des Behälters 1 ohne Werkzeug. Nach dem Abreißen der Zunge 5 ist außerdem durch die konisch schräge Anordnung der Ränder 3 des Behälters 1 eine konische Mündung 2 gebildet, die das Ausgießen und das gezielte Entnehmen des Behälterinhaltes erleichtert. Somit hat diese konische Ausbildung eine Doppelfunktion.

Der Behälterinnenraum erstreckt sich in Form des erwähnten Kanalabschnittes 4 teilweise in die vergrößerte Zunge 5, so daß nach dem Abreißen der Behälter an der Mündung 2 mit Sicherheit geöffnet ist.

In beiden Figuren erkennt man außerdem eine Maßnahme, die insbesondere für Behinderte das Austreten beispielsweise von Pulver oder Granulat erleichtert und mit genügender Sicherheit gewährleistet. Man erkennt im Mündungsbereich des Behälters 1 wenigstens eine Wandschwächung 10, die beispielsweise als Rillung ausgebildet sein kann und ein Aufspreizen der nach dem Abreißen der Zunge 5 entstandenen Öffnung erleichtert bzw. an der nach dem Aufreißen entstandenen Mündungsöffnung einen Führungskanal bildet. Diese Rillung 10 läuft dabei in Ausgießrichtung.

Ferner ist an der Mündung 2 in beiden Ausführungsbeispielen an der Trennstelle 6 eine quer aur Ausgießrichtung verlaufende Wandschwächung 11 vorzugsweise ebenfalls in Form einer Rillung vorgesehen, wobei die in Ausgießrichtung verlaufende Rillung 10 etwa rechtwinklig in diese quer verlaufende Rillung 11 mündet. Die Rillung 11 stellt einen Bereich der an welchem die beiden Seitenwandabschnitte im Gegensatz zu dem umlaufenden Rand 3 und der Zunge 5 nicht aufeinander befestigt sind, so daß das Aufreißen an dieser Stelle begünstigt ist und später auch der Austritt des Behältereinhaltes nicht durch vielleicht teilweise verklebt gebliebene Bereiche behindert wird.

## Patentansprüche

1. Ein- oder Mehrwegbehälter (1) für rieselfähige Füllgüter, beispielsweise Pulver, Granulat oder Flüssigkeit, hergestellt aus einem einzigen, steifen, jedoch biegsamen, flachen Werkstoffzuschnitt aus beschichtetem Karton, welcher durch Aufwölben oder Formen eines Mittelabschnittes oder Bodens des zunächst flachen Zuschnittes vorzugsweise nach innen und durch gleichzeitiges Aufrichten und Aufwölben von zwei Seitenabschnitten bis zur Zusammenfügung und dichten Verbindung der gegenüberliegenden Seitenränder und Flansche (3) dieser Seitenabschnitte geformt ist, wobei an wenigstens einer Stelle die aufeinanderliegenden Flansche (3) zur Bildung zumindest eines flachen Durchtrittskanales (4) nicht verbunden sind, welcher Kanal (4) in einer vor Gebrauch geschlossene, abreißbare Zunge (5) mündet, dadurch gekennzeichnet, daß die Zunge (5) im Bereich des Durchtrittskanales (4) des Behälters (1) eine gegenüber der Kanalbreite und/ oder den Randflanschen (3) so vergrößerte griffartige Zunge (5) ist, daß sie wenigstens eine zusätzliche Greifhilfe aufweist, die als ein die vergrößerte Zunge (5) durchsetzendes Fingerloch (7) ausgebildet ist.

2. Behälter nach Anspruch 1, dadurch gekennzeichnet, daß das Fingerloch (7) exzentrisch an der Zunge (5) angeordnet ist.

3. Behälter nach Anspruch 1 oder 2, dadurch gekennzeichnet, daß an der Öffnungstrennstelle (6) zwischen der griffartigen Zunge (5) und dem Behälter (1) eine Aufreißhilfe vorgesehen ist.

4. Behälter nach einem der Ansprüche 1 bis 3, dadurch gekennzeichnet, daß die seitliche Abmessung der vergrößerten Zunge (5) etwa der Breite des Behälters (1) entspricht und quer zu dem Austrittskanal (4) und der Ausgießrichtung mit diesem T-förmig an der Behältermündung (2) angeordnet ist.

5. Behälter nach einem der Ansprüche 1 bis 4, dadurch gekennzeichnet, daß die in der Ebene der Zunge (5) und des Flansches liegenden Ränder (3) des Behälters (5) im Bereich der vergrößerten abreißbaren Zunge (5) konisch gegen den Rand (8) dieser Zunge (5) hin laufen und ggfs. einen zusätzlichen Schrägschnitt (9) haben und daß zwischen dem dadurch konischen Bereich des Behälters (1) und der demgegenüber seitlich überstehenden abreißbaren Zunge (5) eine spritzwinklige Kerbe als Aufreißhilfe gebildet ist.

6. Behälter nach einem der Ansprüche 1 bis 5, dadurch gekennzeichnet, daß sich der Behälterinnenraum teilweise in die vergrößerte Zunge (5) erstreckt und fortsetzt.

7. Behälter nach einem der Ansprüche 1 bis 6, dadurch gekennzeichnet, daß im Bereich der Mündung (2) des Behälters (1) wenigstens eine in Ausgießrichtung verlaufende Wandschwächung, Rilling (10) od. dgl. vorgesehen ist.

8. Behälter nach einem der Ansprüche 1 bis 7, dadurch gekennzeichnet, daß an der Mündung (2) des Behälters (1) an der Trennstelle (6) zwischen ihm und der Zunge (5) eine quer zur Ausgießrichtung verlaufende Wandschwächung, Rillung (11) od. dgl. vorgesehen ist.

9. Behälter nach Anspruch 7 oder 8, dadurch gekennzeichnet, daß die in Ausgießrichtung verlaufende Rillung (10) etwa rechtwinklig in die quer verlaufende Rillung (11) mündet.

## Revendications

1. Récipient (1) à usage unique ou multiple pour produits à écoulement libre, par exemple de la poudre, des granulés ou du liquide, réalisé à partir d'une seule découpe plate, rigide mais cependant flexible, de carton enduit, qui est mise en forme par le bombement ou la formation d'une partie médiane ou fond de la découpe initialement plate, de préférence vers l'intérieur, et simultanément par le redressement et le bombement de deux parties latérales jusqu'à la réunion et l'assemblage hermétique des bords latéraux en vis-à-vis des bordures (3) de ces parties latérales, les bordures (3) reposant l'une sur l'autre n'étant pas assemblées en au moins un endroit afin de former au moins un canal de passage plat (4), qui débouche dans une languette (5) arrachable, fermée avant l'utilisation, caractérisé en ce que la languette (5) est, dans la région du canal de passage (4) du récipient (1), une laguette (5) élargie à la manière d'une poignée par rapport à la largeur du canal et/ou aux bordures latérales (3) de telle sorte qu'elle présente au moins une aide de préhension supplémentaire, qui est réalisée sous la forme d'un trou pour doigt (7) traversant la languette agrandie (5).

2. Récipient selon la revendication 1, caractérisé en ce que le trou pour doigt (7) est disposé excentriquement sur la languette (5).

3. Récipient selon la revendication 1 ou 2, caractérisé en ce qu'il est prévu une aide à l'arrachage au point de séparation d'ouverture (6) entre la languette du genre poignée (5) et le récipient (1).

4. Récipient selon l'une quelconque des revendications 1 à 3, caractérisé en ce que la dimension latérale de la languette agrandie (4) est approximativement égale à la largeur du récipient (1), et en ce qu'elle est disposée en forme de T, perpendiculairement au canal de sortie (4) et au sens d'écoulement, et conjointement avec ce canal, sur l'embouchure (2) du récipient.

5. Récipient selon l'une quelconque des revendications 1 à 4, caractérisé en ce que les bords du récipient (1) qui se trouvent dans le plan de la languette (5) et de la borduree (3) s'étendent, dans la région de la languette élargie arrachable (5), coniquement vers le bord (8) de cette languette (5), et possèdent éventuellement une découpe oblique supplémentaire (9), et en ce qu'une entaille à angle aigu est formée comme aide à l'arrachage entre la région ainsi conique du récipient (1) et la languette arrachable (5) dépassant latéralement de ce dernier.

6. Récipient selon l'une quelconque des revendications 1 à 5, caractérisé en ce que l'espace intérieur du récipient s'étend et se prolonge partiellement dans la languette agrandie (5).

7. Récipient selon l'une quelconque des revendications 1 à 6, caractérisé en ce qu'il est prévu, dans la région de l'embouchure (2) du récipient (1), au moins un affaiblissement de paroi, sillon (10) ou similaire s'étendant dans le sens d'écoulement.

8. Récipient selon l'une quelconque des revendications 1 à 7, caractérisé en ce qu'il est prévu à l'embouchure (2) du récipient (1), au point de séparation (6) entre le récipient et la languette (5), un affaiblissement de paroi, sillon (11) ou similaire s'étendant perpendiculairement au sens d'écoulement.

9. Récipient selon la revendication 7 ou 8, caractérisé en ce que le sillon (10) s'étendant dans le sens d'écoulement débouche approximativement à angle droit dans le sillon (11) s'étendant perpendiculairement.

## Claims

1. A single or multiple use container (1) for pulverulent or fluid filling matter, for example powder, granular material or liquid, produced from a single stiff but pliant, flat piece of material cut to size consisting of coated cardboard and formed by a centre portion or base of the initially flat cutout being arched or shaped preferably inwardly and by two side portions being simultaneously raised and arched until the opposed side edges and flanges (3) of said side portions are joined and tightly connected, the superposed flanges (3) not being connected at at least one place to compose at least one flat passage (4), said passage (4) ending in a removable tongue (5) closed prior to use, characterized in that in the region of the passage (4) of the container (1) the tongue (5) is a grip-like one enlarged relative to the passage width and/or the edge flanges (3) in such a manner as to feature at least one additional aid for gripping in the form of a finger hole (7) traversing the enlarged tongue (5).

2. The container as claimed in claim 1, characterized in that the finger hole (7) is arranged on the tongue (5) in an eccentric way.

3. The container as claimed in claim 1 or claim 2, characterized in that an aid for tearing open is provided at the parting point between the grip-like tongue (5) and the container (1).

4. The container as claimed in any one of claims 1 to 3, characterized in that the sideward dimension of the enlarged tongue (5) corresponds approximately to the width of the container (1) and is oriented transversely to the discharge passage (4) and the direction of pour and together with said discharge passage forms a T at the mouth (2) of the container.

5. The container as claimed in any one of claims 1 to 4, characterized in that in the region of the enlarged, removable tongue (5), the container (1) has its edges (3) lying in the plane of the tongue (5) and flange running conically towards the edge (8) of said tongue (5) and possibly having an additional diagonal cut (9), and that an acute-angled notch in the form of an aid for tearing open is composed between the thus conical area of the container (1) and the removable tongue (5) projecting laterally relative thereto.

6. The container as claimed in any one of claims 1 to 5, characterized in that the interior of the container extends partly into and is continued in the enlarged tongue (5).

7. The container as claimed in any one of claims 1 to 6, characterized in that at least one weakening of the wall, a scoring (10) or the like, running in the direction of pour is provided in the region of the mouth (2) of the container (1).

8. The container as claimed in any one of claims 1 to 7, characterized in that the mouth (2) of the container (1) is provided at the parting point (6) between the container and the tongue (5) with a weakening of the wall, a scoring (11) or the like, running transversely to the direction of pour.

9. The container as claimed in claim 7 or claim 8, characterized in that the scoring (10) running in the direction of pour meets the transverse scoring (11) at approximately right angles.

*Fig. 1*

*Fig. 2*